# EUROPÄISCHE PATENTSCHRIFT

(11) **EP 3 455 188 B1**
(45) Veröffentlichungstag und Bekanntmachung des Hinweises auf die Patenterteilung: **09.04.2025**
(21) Anmeldenummer: 17719293.7
(22) Anmeldetag: 28.04.2017
(51) Int. Cl.: C04B 18/14, C04B 28/02

(54) **VERFAHREN ZUR BEHANDLUNG VON SCHLACKE**
METHOD FOR TREATING SLAG
PROCEDE DE TRAITEMENT DE LAITIER

(30) Priorität: 09.05.2016 EP 16168751
(43) Veröffentlichungstag der Anmeldung: 20.03.2019
(73) Patentinhaber: Construction Research & Technology GmbH, 83308 Trostberg (DE)
(72) Erfinder: SCHWESIG, Peter, 83308 Trostberg (DE); STEFAN, Madalina, 83308 Trostberg (DE); NICOLEAU, Luc, 77410 Villevaude (FR); KRAUS, Alexander, 83308 Trostberg (DE)
(74) Vertreter: Lorenz, Klaus Uwe
(86) Internationale Anmeldenummer: PCT/EP2017/060164
(87) Internationale Veröffentlichungsnummer: WO 2017/194329

(56) Entgegenhaltungen:
- WO-A1-2007/105029
- WO-A1-2009/030758
- WO-A1-2011/026720
- WO-A1-2012/072466
- WO-A2-02/081398

## Beschreibung

Die Erfindung betrifft ein Verfahren zur Behandlung von Schlacke, das aus dem Verfahren erhaltene Produkt sowie dessen Verwendung.

Als hydraulisch werden Stoffe bezeichnet, die sowohl an der Luft als auch unter Wasser erhärten und wasserbeständig sind. Insbesondere handelt es sich bei hydraulischen Bindemitteln um Zement und Puzzolane, wie etwa Flugasche und Hochofenschlacke.

Zement hat unter den hydraulischen Bindemitteln die größte wirtschaftliche Bedeutung. Mit Wasser angemacht ergibt Zement Zementleim, der durch Hydratation erstarrt und erhärtet und der auch nach dem Erhärten unter Wasser fest und raumbeständig bleibt. Zement besteht im Wesentlichen aus Portlandzementklinker und kann weiterhin beispielsweise Hüttensand, Puzzolan, Flugasche, Kalkstein, Füller und Zementzusatzmittel enthalten. Die Zementbestandteile müssen hinsichtlich ihrer Zusammensetzung statistisch betrachtet homogen sein, was insbesondere durch adäquate Mahl- und Homogenisierungsverfahren erreicht werden kann.

Zement sowie die Rohstoffe für die Zementherstellung werden industriell vor allem in Rohr-Kugelmühlen gemahlen, bei denen dem Effekt von Mahlhilfsmitteln eine besondere Bedeutung zukommt.

Für die Klinkerherstellung werden in der Regel die Zement Rohstoffe trocken vermahlen. Bei der trockenen Aufbereitung werden die Rohmaterialkomponenten über Dosiereinrichtungen einer Mühle in einem bestimmten Mischungsverhältnis aufgegeben und zu Rohmehl feingemahlen. Anschließend wird das Rohmehl bei etwa 1.450 °C gebrannt, wodurch Klinker entsteht. Eine gute Mahlung der Rohstoffe ist entscheidend für die Klinkerqualität. Das nun kugelförmige Material wird abgekühlt und mit Hüttensand, Flugasche, Kalkstein und Gips zum Endprodukt Zement gemahlen.

Die Herstellung von Zement ist ein sehr energieaufwendiger und damit teurer Prozess, bei welchem große Mengen an Kohlendioxid freigesetzt werden. Sowohl aus ökonomischen als auch ökologischen Gesichtspunkten ist es deshalb von großem Interesse alternative Rohstoffe als Ersatz für Zement zu verwenden.

Schlacke wird im Baubereich bereits seit langer Zeit als Sekundärrohstoff eingesetzt. Es ist ein Nebenprodukt, das insbesondere aus Eisenhochofenbetrieben erhalten wird. Konventionell wird der Hochofen mit Schichten aus Eisenerz, Zuschlagkalk, Brennstoff und anderen Quellen von Eisenoxid als Teil eines hochkontrollierten metallurgischen Prozesses beschickt. Wärme und Sauerstoff werden in den Ofen eingebracht, um sehr hohe Temperaturen zu erreichen, und geschmolzenes Eisen wird aufgefangen, indem der untere Bereich des Ofens abgezapft wird. Geschmolzene Schlacke, die unmittelbar über dem geschmolzenen Eisen gebildet wird, wird ebenfalls abgezapft und aus dem Ofen entnommen, wo sie dann mit Wasser abgeschreckt wird, um ein feuchtes granuliertes Schlackematerial zu erzeugen.

Die granulierte Hochofenschlacke ist ein nicht-metallisches Produkt, das hauptsächlich aus Silikaten und Aluminosilikaten von Calcium und anderen Basen besteht. ASTM C-989 liefert Spezifikationen für granulierte Schlacke, die in Beton- und Mörtelzusammensetzungen verwendet werden kann, und ASHTO-MR02 liefert die Spezifikation für das gemahlene Produkt, das aus der granulierten Schlacke gebildet werden kann und als Komponente in gemischten Zementen verwendet wird (z. B. ASTM C-595 Standard Specifications for Blended Hydraulic Cements; Standardspezifikationen für gemischte hydraulische Zemente),

Gemischte Zementzusammensetzungen können gebildet werden, indem ein Teil (bis zu etwa 50 Gew.-%) der hydraulischen Zementkomponente der Zusammensetzung durch ein gemahlenes Pulverschlackenprodukt ersetzt wird. Die Zementzusammensetzungen aus Mörtel (hydraulischer Zement, feiner Zuschlag wie Sand und Wasser) und Beton (hydraulischer Zement, feiner Zuschlag, grober Zuschlag wie Stein und Wasser) zeigen allgemein erhöhte Spätfestigkeit, wenn Schlacke als Teil der Zusammensetzung vorhanden ist.

Granulierte Schlacke wird normalerweise durch eine Kugelmühle oder Walzenpresse behandelt, um das pulverisierte Produkt zu liefern. In dem Kugelmühlenverfahren werden die Granulate durch kontinuierliches statistisches Aufschlagen der Kugelelemente der Mühle behandelt, um die Granulate zu dem gewünschten Pulver aufzubrechen. Die Kugelmühle arbeitet mit höherer Effizienz, wenn ein Mittel (allgemein als "Mahlhilfsmittel" bezeichnet) in der Mühle vorhanden ist, das dazu führt, dass die gebildeten Teilchen in der Kugelmühle dispergiert bleiben. Daher sind Verbindungen wie Lignosulfonate, Triethanolamin und dergleichen in Kugelmühlenverfahren verwendet worden.

Die Walzenpresse arbeitet nach einem ganz anderen Mechanismus als die Kugelmühle. Die Schlackengranulate werden in den Spalt eines Walzenpaares eingespeist. Die Granulate werden einer einzigen Quetschkraft ausgesetzt, die stattfindet, wenn die Granulate zwischen den Walzen hindurchgehen. Die Walzen quetschen die Granulate, was dazu führt, dass sie in sehr kleine Teilchen zerbrechen, sowie ein Zerbrechen der Granulate verursacht wird, die vollständig zerfallen, wenn sie nachfolgend einem Deagglomerierer ausgesetzt werden.

Aus der DE 69610562 ist ein Verfahren zur Herstellung von gemahlenem Schlackepulver mit einer Walzenpresse unter Zusatz von (a) 0,002 bis 0,3 Gew.-% Polymer ausgewählt aus Polyacrylsäure, Alkalimetallsalz von Polyacrylsäure und Mischungen derselben, wobei das Polymer ein durchschnittliches Molekulargewicht (Gewichtsmittel) von mindestens 25000 hat, und (b) 0,1 bis 4 Gew.-% Wasser, bezogen auf das Gesamtgewicht des Schlackeneinsatzstroms, bekannt.

Die WO 2007/105029 beschreibt einen Prozess zur Herstellung von gemahlenem Schlackepulver mit erhöhter Reaktivität, wobei granulierte Schlacke in einem Nassverfahren in einer Rührwerkskugelmühle vermahlen wird. Das erhaltene Produkt beginnt innerhalb von 48 Stunden zu hydratisieren und ist innerhalb von 28 Tagen vollständig hydratisiert. Nachteilig ist jedoch, dass die Frühfestigkeit des so erhaltenen Produktes im Vergleich zu Zement geringer ist.

Aufgabe der vorliegenden Erfindung war es deshalb ein Verfahren zur Vermahlung von Schlacke zur Verfügung zu stellen, welches ein hochreaktives Produkt liefert, welches Portlandzement in Mörteln und Beton vollständig ersetzen kann. Weiterhin sollte das Verfahren ein Produkt liefern, welches in allen Alterungsstufen zumindest mit Portlandzement vergleichbare Festigkeitseigenschaften aufweist.

Gelöst wurde diese Aufgabe durch ein Verfahren zur Nassvermahlung von Schlacke, wobei mehr als 100 kWh, insbesondere mehr als 180 kWh, besonders bevorzugt 200 bis 2000 kWh, insbesondere von 300 bis 1000 kWh Mahlenergie pro Tonne Schlacke eingebracht werden und wobei das Gewichtsverhältnis von Schlacke zu Wasser von 0,05 bis 4 zu 1 beträgt und vor oder während der Nassvermahlung dem Mahlgut 0,005 bis 2 Gew.-%, bevorzugt 0,01 bis 0,5 Gew.-%, insbesondere bevorzugt 0,05 bis 0,5 Gew.-%, eines Mahlhilfsmittels, bezogen auf die Schlacke, zugesetzt wird, welches mindestens eine Verbindung aus der Reihe Polycarboxylatether, phosphatiertes Polykondensationsprodukt, Ligninsulfonat, Melaminformaldehydsulfonat, Naphtalinformaldehydsulfonat, Mono-, Di-, Tri- und Polyglykole, Polyalkohole, Alkanolamin, Aminosäuren, Zucker, Molasse und Erhärtungsbeschleuniger auf Basis von Calciumsilikathydrat umfasst.

Überraschend wurde gefunden, dass das erfindungsgemäße Verfahren eine Schlacke liefert, welche allein oder als Mischung mit anderen anorganische Bindemittel, insbesondere Portlandzement, nach dem Anmachen mit Wasser eine sehr hohe Frühfestigkeit nach ein und zwei Tagen, als auch eine hervorragende Spätfestigkeit nach 28 Tagen erreicht. Die Frühfestigkeitseigenschaften von reinem Portlandzement werden durch die erfindungsgemäß hergestellten Produkte deutlich übertroffen.

Insbesondere bevorzugt handelt es sich bei der erfindungsgemäß eingesetzten Schlacke um Hochofenschlacke.

In einer bevorzugten Ausführungsform weist die in dem erfindungsgemäßer Verfahren eingesetzte Schlacke folgende Zusammensetzung auf: 20 bis 50 Gew.-% SiO₂, 5 bis 40 Gew.-% Al₂O₃, 0 bis 3 Gew.-% Fe₂O₃, 20 bis 50 Gew.-% CaO, 0 bis 20 Gew.-% MgO, 0 bis 5 Gew.-% MnO, 0 bis 2 Gew.-% SO₃ und > 80 Gew.-% Glasgehalt. Insbesondere bevorzugt hat die Schlacke folgende Zusammensetzung 30 bis 45 Gew.-% SiO₂, 5 bis 30 Gew.-% Al₂O₃, 0 bis 2 Gew.-% Fe₂O₃, 30 bis 50 Gew.-% CaO, 0 bis 15 Gew.-% MgO, 0 bis 5 Gew.-% MnO, 0 bis 1 Gew.-% SO₃ und > 90 Gew.-% Glasgehalt.

Hinsichtlich des erfindungsgemäßen Verfahrens ist es besonders bevorzugt, dass das Gewichtsverhältnis von Schlacke zu Wasser von 0,1 bis 3 zu 1, insbesondere von 0,5 bis 2 zu 1 und besonders bevorzugt von 0,4 bis 0,6 zu 1 beträgt.

Hierbei ist es bevorzugt, dass bei der Nassvermahlung Mahlkörper eingesetzt werden, wobei das Gewichtsverhältnis von Schlacke zu Mahlkörpern 1 bis 20 zu 1, insbesondere bevorzugt 14 bis 16 zu 1 beträgt.

Die Mahlkörper sind insbesondere als Kugel ausgebildet, wobei ein Durchmesser der Kugeln von 0,5 bis 3 mm als bevorzugt anzusehen ist.

Hinsichtlich der Zeitdauer, in welcher die Schlacke nass vermahlen wird haben sich insbesondere 10 Minuten bis 3 Stunden, bevorzugt 1 bis 2 Stunden als vorteilhaft erwiesen.

Insbesondere kann die Nassvermahlung in einer Rührwerkskugelmühle durchgeführt werden. Die Rührwerkskugelmühle umfasst eine Mahlkörper enthaltende Mahlkammer, einem Stator und einem Rotor, welche in der Mahlkammer angeordnet sind. Weiterhin bevorzugt umfasst die Rührwerkskugelmühle eine Mahlgut- Einlassöffnung und eine Mahlgut-Auslassöffnung zum Zuführen und Abführen von Mahlgut in die bzw. aus der Mahlkammer, sowie einer in der Mahlkammer stromauf von der Auslassöffnung angeordneten Mahlkörper-Trenneinrichtung, die dazu dient, in dem Mahlgut mitgeführte Mahlkörper aus dem Mahlgut abzutrennen, bevor dieses durch die Auslassöffnung aus dem Mahlraum abgeführt wird.

Um die in das Mahlgut in der Mahlkammer eingetragene mechanische Mahlleistung zu steigern, sind bevorzugt am Rotor und/oder am Stator Stifte vorhanden, die in den Mahlraum ragen. Im Betrieb wird somit einerseits auf direktem Wege durch Stöße zwischen dem Mahlgut und den Stiften ein Beitrag zur Mahlleistung erbracht. Andererseits erfolgt ein weiterer Beitrag zur Mahlleistung auf indirektem Wege, durch Stöße zwischen den Stiften und den im Mahlgut mitgeführten Mahlkörpern und den dann wiederum erfolgenden Stößen zwischen dem Mahlgut und den Mahlkörpern. Schließlich tragen auch noch auf das Mahlgut einwirkende Scherkräfte und Dehnkräfte zur Zerkleinerung der suspendierten Mahlgutpartikel bei.

In Abhängigkeit von der eingebrachten Mahlenergie verfügt die aus der erfindungsgemäßen Vermahlung erhaltene Schlacke über eine unterschiedliche Partikelgrößenverteilung und Gesamtoberfläche, welche auch als Feinheit bezeichnet wird. Die Partikelgrößenverteilung von anorganischen Feststoffs wird typischerweise nach Blaine in cm²/g angegeben. Die Feinheit als auch die Partikelgrößenverteilung ist in der Praxis von großer Relevanz. Solche Partikelgrößenanalysen werden üblicherweise durch Lasergranulometrie oder Luftstrahlsiebe ermittelt. Durch den Einsatz der erfindungsgemäßen Mahlhilfsmittel kann die Mahlzeit zur Erreichung der gewünschten Feinheit deutlich reduziert werden.

Bevorzugt ist die Partikelgröße d₅₀ der aus der erfindungsgemäßen Vermahlung erhaltenen Schlacke kleiner als 10 µm, insbesondere kleiner als 5 µm, bevorzugt kleiner als 3 µm und besonders bevorzugt kleiner als 2 µm, gemessen durch Lasergranulometrie mit einem MasterSizer^{®} 2000 der Malvern Instruments Ltd..

Insbesondere kann es sich bei dem Mahlhilfsmittel um mindestens eines aus der Reihe Polycarboxylatether und phosphatiertes Polykondensationsprodukt handeln, wobei das Mahlhilfsmittel eine Struktureinheit (I),

*-U-(C(O))ₖ-X-(AlkO)ₙ-W (I)

wobei
- *: die Bindungsstelle an das säuregruppenhaltige Polymer anzeigt,
- U: für eine chemische Bindung oder eine Alkylengruppe mit 1 bis 8 C-Atomen steht,
- X: Sauerstoff, Schwefel oder eine Gruppe NR¹ bedeutet,
- k: 0 oder 1 ist,
- n: für eine ganze Zahl steht, deren Mittelwert, bezogen auf das säuregruppenhaltige Polymer im Bereich von 1 bis 300 liegt,
- Alk: für C₂-C₄-Alkylen steht, wobei Alk innerhalb der Gruppe (Alk-O)ₙ gleich oder verschieden sein kann,
- W: einen Wasserstoff-, einen C₁-C₆-Alkyl- oder einen Arylrest bedeutet oder die Gruppe Y-F bedeutet, wobei
- Y: für eine lineare oder verzweigte Alkylengruppe mit 2 bis 8 C-Atomen steht, die einen Phenylring tragen kann,
- F: für einen über Stickstoff gebundenen 5- bis 10-gliedrigen Stickstoffheterocyclus steht, der als Ringglieder, neben dem Stickstoffatom und neben Kohlenstoffatomen, 1 , 2 oder 3 zusätzliche Heteroatome, ausgewählt unter Sauerstoff, Stickstoff und Schwefel aufweisen kann, wobei die Stickstoffringlieder eine Gruppe R² aufweisen können, und wobei 1 oder 2 Kohlenstoffringglieder als Carbonylgruppe vorliegen können,
- R¹: für Wasserstoff, C₁-C₄-Alkyl oder Benzyl steht, und
- R²: für Wasserstoff, C₁-C₄-Alkyl oder Benzyl steht,
umfasst.

In einer bevorzugten Ausführungsform umfasst das phosphatierte Polykondensationsprodukt
(II) eine einen Aromaten oder Heteroaromaten und eine Polyethergruppe aufweisende Struktureinheit sowie
(III) eine phosphatierte einen Aromaten oder Heteroaromaten aufweisende Struktureinheit.

Die Struktureinheiten (II) und (III) werden bevorzugt durch folgende allgemeine Formeln repräsentiert

(II) A-U-(C(O))ₖ-X-(AlkO)ₙ-W

mit
A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen;

(III) A-U-(C(O))ₖ-X-(AlkO)ₙ-P(O)(OMₐ)₂

A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen und
M für Wasserstoff, ein ein-, zwei- oder dreiwertiges Metallkation, Ammoniumion oder einen organischen Aminrest
a für 1/3, 1/2 oder 1 stehen

Bevorzugt enthält das Polykondensationsprodukt eine weitere Struktureinheit (IV), welche durch folgende Formel repräsentiert wird 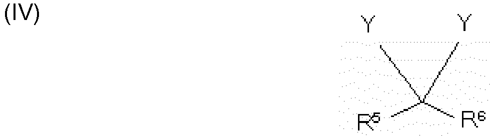 mit
Y unabhängig voneinander gleich oder verschieden und repräsentiert durch (II), (III) oder weitere Bestandteile des Polykondensationsproduktes.

R⁵ und R⁶ sind bevorzugt gleich oder verschieden und repräsentiert durch H, Methyl, Ethyl, Propyl, COOH oder eine substituierte oder unsubstituierte aromatische oder heteroaromatische Verbindung mit 5 bis 10 C-Atomen. Hierbei werden R⁵ und R⁶ in Struktureinheit (IV) unabhängig voneinander bevorzugt durch H, COOH und/oder Methyl repräsentiert.

In einer besonders bevorzugten Ausführungsform werden R⁵ und R⁶ durch H repräsentiert.

Das molare Verhältnis der Struktureinheiten (II), (III) und (IV) des erfindungsgemäßen phosphatierten Polykondensationsproduktes kann in weiten Bereichen variiert werden. Als zweckmäßig hat es sich erwiesen, dass das Molverhältnis der Struktureinheiten [(II) + (III)] : (IV) 1 : 0,8 bis 3, bevorzugt 1 : 0,9 bis 2 und besonders bevorzugt 1: 0,95 bis 1,2 beträgt.

Das Molverhältnis der Struktureinheiten (II) : (III) liegt normalerweise bei 1 : 10 bis 10 : 1, bevorzugt bei 1 : 7 bis 5 : 1 und besonders bevorzugt bei 1 : 5 bis 3 : 1.

Die Gruppen A und D in den Struktureinheiten (II) und (III) des Polykondensationsproduktes werden meist durch Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl bevorzugt Phenyl repräsentiert, wobei A und D unabhängig voneinander gewählt werden können und auch jeweils aus einem Gemisch der genannten Verbindungen bestehen können. Die Gruppen X und E werden unabhängig voneinander bevorzugt durch O repräsentiert.

Bevorzugt wird n in Struktureinheit (I) durch eine ganze Zahl von 5 bis 280, insbesondere 10 bis 160 und besonders bevorzugt 12 bis 120 repräsentiert und b in Struktureinheit (III) durch eine ganze Zahl von 0 bis 10, bevorzugt 1 bis 7 und besonders bevorzugt 1 bis 5. Die jeweiligen Reste, deren Länge durch n bzw. b definiert wird, können hierbei aus einheitlichen Baugruppen bestehen, es kann aber auch zweckmäßig sein, dass es sich um eine Mischung aus unterschiedlichen Baugruppen handelt. Weiterhin können die Reste der Struktureinheiten (II) und (III) unabhängig voneinander jeweils die gleiche Kettenlänge besitzen, wobei n bzw. b jeweils durch eine Zahl repräsentiert wird. Es wird aber in der Regel zweckmäßig sein, dass es sich jeweils um Mischungen mit unterschiedlichen Kettenlängen handelt, so dass die Reste der Struktureinheiten im Polykondensationsprodukt für n und unabhängig für b unterschiedliche Zahlenwerte aufweisen.

In einer besonderen Ausführungsform sieht die vorliegende Erfindung weiterhin vor, dass es sich um ein Natrium-, Kalium-, Ammonium- und/oder Calcium-Salz und bevorzugt um ein Natrium- und/oder Kalium-Salz, des phosphatierten Polykondensationsproduktes handelt.

Häufig weist das erfindungsgemäße phosphatierte Polykondensationsprodukt ein gewichtsmittleres Molekulargewicht von 4000 g/mol bis 150.000 g/mol, vorzugsweise 10.000 bis 100.000 g/mol und besonders bevorzugt 20.000 bis 75.000 g/mol auf.

Bezüglich der gemäß vorliegender Erfindung bevorzugt zu verwendenden phosphatierten Polykondensationsprodukte und deren Herstellung wird weiterhin auf die Patentanmeldungen WO 2006/042709 und WO 2010/040612 Bezug genommen, deren Inhalt hiermit in die Anmeldung aufgenommen wird.

In einer weiteren bevorzugten Ausführungsform stellt der erfindungsgemäße Polycarboxylatether mindestens ein Copolymer dar, welches erhältlich ist durch Polymerisation einer Mischung von Monomeren, umfassend
(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
   und
(VI) mindestens ein ethylenisch ungesättigtes Monomer mit
   einer Struktureinheit (I).

Die Copolymere entsprechend der vorliegenden Erfindung enthalten mindestens zwei Monomerbausteine. Es kann aber auch vorteilhaft sein, Copolymere mit drei oder mehr Monomerbausteinen zu verwenden.

In einer bevorzugten Ausführungsform wird das ethylenisch ungesättigte Monomer (V) durch mindestens eine der folgenden allgemeinen Formeln aus der Gruppe (Va), (Vb) und (Vc) repräsentiert:

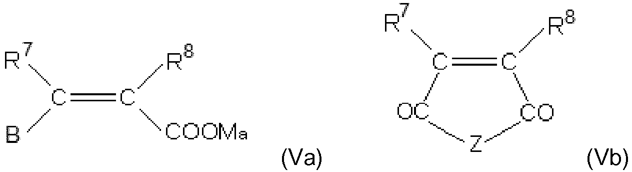

Bei dem Mono- oder Dicarbonsäure-Derivat (Va) und dem in cyclischer Form vorliegenden Monomer (Vb), wobei Z = O (Säureanhydrid) oder NR¹⁶ (Säureimid) darstellen, steht R⁷ und R⁸ unabhängig voneinander für Wasserstoff oder einen aliphatischen Kohlenwasserstoffrest mit 1 bis 20 C-Atomen, vorzugsweise eine Methylgruppe. B bedeutet H, -COOMₐ, -CO-O(C_{q}H_{2q}O)ᵣ-R⁹, -CO-NH-(C_{q}H_{2q}O)ᵣ-R⁹.

M bedeutet Wasserstoff, ein ein-, zwei- oder dreiwertiges Metallkation, vorzugsweise Natrium-, Kalium-, Calcium- oder Magnesium-Ion, weiterhin Ammonium oder ein organischer Aminrest sowie a = 1/3, 1/2 oder 1, je nachdem, ob es sich bei M um ein ein-, zwei- oder dreiwertiges Kation handelt. Als organische Aminreste werden vorzugsweise substituierte Ammonium-Gruppen eingesetzt, die sich ableiten von primären, sekundären oder tertiären C₁₋₂₀-Alkylaminen, C₁₋₂₀-Alkanolaminen, C₅₋₈-Cycloalkylaminen und C₆₋₁₄-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

R⁹ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, q = 2, 3 oder 4 sowie r = 0 bis 200, vorzugsweise 1 bis 150. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Weiterhin steht Z für O oder NR¹⁶, wobei R¹⁶ unabhängig voneinander gleich oder verschieden sowie repräsentiert wird durch einen verzweigten oder unverzweigten C₁- bis C₄₀-Alkylrest, C₅- bis C₈-Cycloalkylrest, Arylrest, Heteroarylrest oder H.

Die folgende Formel stellt das Monomer (Vc) dar:

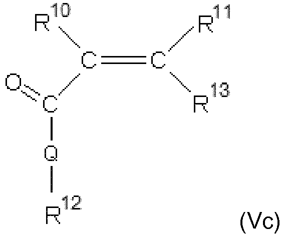

Hierbei steht R¹⁰ und R¹¹ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen.

Weiterhin ist R¹² gleich oder verschieden sowie repräsentiert durch (CₙH₂ₙ)-SO₃Mₐ mit n = 0, 1, 2, 3 oder 4, (CₙH₂ₙ)-OH mit n = 0, 1, 2, 3 oder 4; (CₙH₂ₙ)-PO₃(Mₐ)₂ mit n = 0, 1, 2, 3 oder 4, (CₙH₂ₙ)-OPO₃(Mₐ)₂ mit n= 0, 1, 2, 3 oder 4, (C₆H₄)-SO₃Mₐ, (C₆H₄)-PO₃(Mₐ)₂, (C₆H₄)-OPO₃(Mₐ)₂ und (CₙH₂ₙ)-NR¹⁴_{b} mit n = 0, 1, 2, 3 oder 4 und b = 2 oder 3 sowie M für Wasserstoff, ein ein-, zwei- oder dreiwertiges Metallkation, Ammoniumion oder einen organischen Aminrest und a für 1/3, 1/2 oder 1.

R¹³ bedeutet H, -COOMₐ, -CO-O(C_{q}H_{2q}O)ᵣ-R⁹, -CO-NH-(C_{q}H_{2q}O)ᵣ-R⁹, wobei Mₐ, R⁹, q und r die oben genannte Bedeutungen besitzen.

R¹⁴ steht für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.

Weiterhin ist Q gleich oder verschieden sowie repräsentiert durch NH, NR¹⁵ oder O, wobei R¹⁵ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.

In einer besonders bevorzugten Ausführungsform wird das ethylenisch ungesättigte Monomer (VI) durch folgende allgemeine Formeln repräsentiert 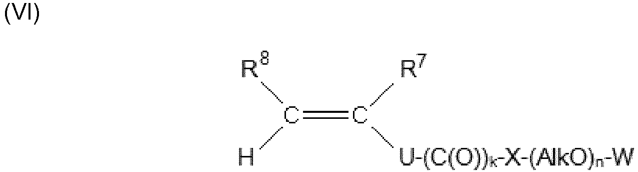 worin alle Reste die oben genannten Bedeutungen aufweisen.

Das durch Gelpermeationschromatographie (GPC) bestimmte mittlere Molekulargewicht M_{w} des erfindungsgemäßen Polycarboxylatethers beträgt vorzugsweise 5,000 bis 200,000 g/mol, besonders bevorzugt 10,000 bis 80,000 g/mol, und ganz besonders bevorzugt 20,000 bis 70,000 g/mol. Die Polymere wurden mittels Größenausschlusschromatographie auf mittlere Molmasse und Umsatz analysiert (Säulenkombinationen: OH-Pak SB-G, OH-Pak SB 804 HQ und OH-Pak SB 802.5 HQ von Shodex, Japan; Elutionsmittel: 80 Vol.-% wässrige Lösung von HCO₂NH₄ (0,05 mol/l) und 20 Vol.-% Acetonitril; Injektionsvolumen 100 µl; Durchflussrate 0,5 ml/min). Die Kalibrierung zur Bestimmung der mittleren Molmasse erfolgte mit linearen Polyethylenglycol-Standards.

Vorzugsweise erfüllt das erfindungsgemäße Copolymer die Anforderungen der Industrienorm EN 934-2 (Februar 2002).

In einer besonders bevorzugten Ausführungsform umfasst das Mahlhilfsmittel einen Erhärtungsbeschleuniger auf Basis von Calciumsilikathydrat. Hierbei ist es bevorzugt, dass die Partikelgröße d₅₀ des Erhärtungsbeschleunigers auf Basis von Calciumsilikathydrat kleiner als 5 µm ist, gemessen durch Lichtstreuung, bevorzugt mit einem MasterSizer^{®} 2000 der Malvern Instruments Ltd..

Der Erhärtungsbeschleuniger auf Basis von Calciumsilikathydrat kann insbesondere durch ein Verfahren erhalten werden, in welchem ein wasserlösliches Calciumsalz mit einer wasserlöslichen Silikatverbindung in Gegenwart von Wasser und einem polymeren Dispergiermittel zur Reaktion gebracht wird.

Bezüglich der gemäß vorliegender Erfindung bevorzugt zu verwendenden Erhärtungsbeschleuniger auf Basis von Calciumsilikathydrat und deren Herstellung wird weiterhin auf die Patentanmeldungen WO2010/026155, WO2011/026720 und WO2011/026723 Bezug genommen.

Ein weiterer Gegenstand der vorliegenden Erfindung ist eine vermahlene Schlacke, welche nach dem erfindungsgemäßen Verfahren erhalten wird, wobei die vermahlene Schlacke das Mahlhilfsmittel umfasst. Das Verfahren zur Herstellung der erfindungsgemäßen Schlacke umfasst somit keinen Schritt zum vollständigen Entfernen des eingesetzten Mahlhilfsmittels.

Weiterhin sieht die vorliegende Erfindung die Verwendung einer nach dem erfindungsgemäßen Verfahren erhaltenen Schlacke als Bindemittel oder in einer Bindemittelzusammensetzung vor, wobei der Bindemittelanteil bevorzugt zu 5 bis 100 Gew.-% aus der erfindungsgemäßen Schlacke besteht. Besonders vorteilhaft umfasst der Bindemittelanteil weiterhin Zement, insbesondere Portlandzement, wobei der Bindemittelanteil bevorzugt 5 bis 99 Gew.-% Schlacke und 1 bis 95 Gew.-% Zement umfasst. Insbesondere können in Bindemittelzusammensetzungen, in denen bisher Zement, insbesondere Portlandzement und/oder Mikrosilika und/oder Metakaolin eingesetzt wurden, diese Bindemittel vollständig oder zumindest teilweise durch die erfindungsgemäße Schlacke ersetz werden.

In einer weiteren Ausführungsform sieht die vorliegende Erfindung die Verwendung einer erfindungsgemäßen Schlacke in einer zementären Zusammensetzung in einer Menge von 0,1 bis 99 Gew.-%, insbesondere 1 bis 50 Gew.-% bezogen auf die Trockenmasse vor. Bei der zementären Zusammensetzung kann es sich insbesondere um Beton oder Zement handeln.

In einer weiterhin bevorzugten Ausführungsform sieht die vorliegende Erfindung die Verwendung einer nach dem erfindungsgemäßen Verfahren erhaltenen Schlacke in einer Bindemittelzusammensetzung vor, wobei der Bindemittelanteil weiterhin mindestens ein alkaliaktiviertes Alumosilikatbindemittel umfasst. Bevorzugt umfasst der Bindemittelanteil 5 bis 99 Gew.-% Schlacke und 1 bis 95 Gew.-% des alkaliaktivierten Alumosilikatbindemittels. Unter alkaliaktivierten Alumosilikatbindemitteln werden zementartige Materialien verstanden, die durch Umsetzung von mindestens zwei Komponenten gebildet werden. Bei der ersten Komponente handelt es sich um eine reaktive Feststoffkomponente, welche SiO₂ und Al₂O₃ enthält, z. B. Flugasche oder Metakaolin. Die zweite Komponente ist ein alkalischer Aktivator, z.B. Natrium-Wasserglas oder Natriumhydroxid. In Gegenwart von Wasser kommt es durch den Kontakt der beiden Komponenten zur Erhärtung durch Bildung eines alumosilikatischen, amorphen bis teilkristallinen Netzwerkes, welches wasserbeständig ist. Einen Überblick über die im Sinne der vorliegenden Erfindung als alkalisch aktivierbare Alumosilikatbindemittel in Frage kommenden Substanzen gibt die Literaturstelle Alkali-Activated Cements and Concretes, Caijun Shi, Pavel V. Krivenko, Della Roy, (2006), 30-63 und 277-297.

Bei der Bindemittelzusammensetzung, handelt es sich bevorzugt um einen Trockenmörtel. Das ständige Streben nach weitgehender Rationalisierung sowie verbesserter Produktqualität hat dazu geführt, dass im Baubereich Mörtel für die verschiedensten Einsatzbereiche heute praktisch nicht mehr auf der Baustelle selbst aus den Ausgangsstoffen zusammengemischt wird. Diese Aufgabe wird heute weitgehend von der Baustoffindustrie werksseitig übernommen und die gebrauchsfertigen Mischungen als sogenannte Werktrockenmörtel zur Verfügung gestellt. Dabei werden fertige Gemische, die auf der Baustelle ausschließlich durch Zugabe von Wasser und Durchmischen verarbeitbar gemacht werden, gemäß DIN 18557 als Werkmörtel, insbesondere als Werktrockenmörtel bezeichnet. Derartige Mörtelsysteme können die verschiedensten bauphysikalischen Aufgaben erfüllen. Je nach gestellter Aufgabe werden dem Bindemittel, welches neben der erfindungsgemäßen Schlacke auch Zement und/oder Kalk und/oder Calciumsulfat enthalten kann, weitere Additive bzw. Zusatzmittel beigemengt, um den Werktrockenmörtel an den speziellen Einsatzzweck anzupassen. Hierbei kann es sich bspw. um Schwundreduzierer, Expansionsmittel, Beschleuniger, Verzögerer, Dispergiermittel, Verdicker, Entschäumer, Luftporenbildner, Korrosionsinhibitoren handeln.

Bei dem erfindungsgemäßen Werktrockenmörtel kann es sich insbesondere um Mauermörtel, Putzmörtel, Mörtel für Wärmedämmverbundsysteme, Sanierputze, Fugenmörtel, Fliesenkleber, Dünnbettmörtel, Estrichmörtel, Vergussmörtel, Einpressmörtel, Spachtelmassen, Dichtschlämmen, Reparaturmörtel oder Auskleidungsmörtel (z. B. für Trinkwasserrohre) handeln. Weiterhin kann die erfindungsgemäße Schlacke auch in Beton eingesetzt werden. Als weitere Anwendung ist die Verwendung der erfindungsgemäßen Schlacke in Vorsatzbeton für Betonpflastersteine zu nennen.

Insbesondere hat sich herausgestellt, dass die erfindungsgemäße Schlacke in Bindemittelzusammensetzungen nach dem Aushärten zu einer verbesserten Alterungsbeständigkeit der hergestellten Bauteile führt, wobei insbesondere ein verbesserter Sulfatwiderstand, Frost-/Taubeständigkeit, Chloridwiderstand und eine Verringerung von Ausblühungen an der Bauteiloberfläche zu nennen sind.

Die nachfolgenden Beispiele verdeutlichen die Vorteile der vorliegenden Erfindung.

### Beispiele

### Allgemeine Versuchsvorschrift

12 kg eines granulierten Hüttensands (Hüttensand Salzgitter GmbH & Co. KG) werden in einer Trommelkugelmühle 110 min auf eine spezifische Oberfläche von 3500 cm²/g (nach Blaine) gemahlen.

Aus 700 g des gemahlenen Hüttensandes mit einer spezifischen Oberfläche von 3500 cm²/g und 1421 g vollentsalztem Wasser, welchem ggf. 0,1 Gew.-% eines erfindungsgemäßen Mahlhilfsmittels, bezogen auf den gemahlenen Hüttensand, zugesetzt werden, wird eine Suspension hergestellt. Diese Suspension wird in ein Rührgefäß einer Rühwerkskugelmühle mit Lochscheiben (Drais Pearl Mill) überführt und die Mühle bei 2580 U/min im Kreislauf betrieben. Das Volumen der Mahlkammer beträgt 0,94 Liter. Als Mahlkörper werden Kugeln aus Zirkonoxid mit einem Durchmesser von 0,8 mm verwendet. Der Füllgrad der Mahlkammer mit den Mahlkörpern beträgt 75%, wobei das Gewichtsverhältnis von Schlacke zu Mahlkörpern 0,066 zu 1 und die Mahldauer ca. 2 Stunden beträgt. Durch die Nassvermahlung werden umgerechnet 750 kWh Mahlenergie pro Tonne Schlacke eingebracht.

Anschließend werden die Mahlkörper durch Siebung von der Suspension abgetrennt. Zum Abtrennen des Hüttensandes aus der Suspension wird über einen Glasfaserfilter (Whatman Glasfaserfilter GF/F) mittels Saugflasche abfiltriert und der Filterkuchen mit Isopropanol überschichtet.

Anschließend erfolgt die Trocknung des Materials im Stickstoffstrom bei 40°C.

Das erhaltene trockene Produkt wird durch ein 250 µm Sieb gestrichen und im Gewichtsverhältnis 50:50 mit einem kommerziell erhältlichen CEM I 42.5N (Schwenk Zement KG, Werk Mergelstetten) vermengt.

### Anwendungsbeispiel

Die Herstellung des Mörtels für die Festigkeitsprüfung erfolgt nach EN196-1 unter zusätzlicher Zugabe eines Fließmittels um ein Ausbreitmaß des Mörtels von ca. 20 cm zu erreichen. Zu 450 g des Bindemittel bestehend aus reinem CEM I 42,5 R (Schwenk Zement KG, Werk Mergelstetten) oder aus einer Mischung dieses Zementes mit Hüttensand werden 225 g Wasser in einem Mischer nach EN 196-1 vermischt (w/z = 0,5) und nach der in EN 196-1 angegebenen Zeit 1350 g CEN-Normasand, EN 196-1 hinzugefügt (z/s = 0,33) und nach dem in EN196-1 angegebenen Mischregime vermengt. Anschließend wird durch Zugabe eines Polycarboxylatether-Fließmittels (Master ACE 430, Markenname der BASF Construction Solutions GmbH) das Ausbreitmaß nach EN 196-1 auf ca. 20 cm eingestellt.

Die Druckfestigkeitsprüfung erfolgte gemäß EN 196-1.

**Tabelle 1: Prüfung der Druckfestigkeit**

| **Versuch** | d₅₀-Wert [µm] | **Druckfestigkeit [MPa]** | | |
|---|---|---|---|---|
| | | 1 Tag | 2 Tage | 28 Tage |
| | | | | |
| V1 | - | 10,7 | 19,2 | 63,6 |
| V2 | 17,5 | 2,9 | 6,7 | 50,5 |
| V3 | 8,3* | 10,1 | 25,8 | 65,2 |
| V4 | 6,3* | 18,5 | 42,3 | 69,9 |
| V5 | 1,7* | 20,6 | 44,6 | 68,8 |
| V6 | 1,9* | 1,1 | 3,2 | 10,7 |
| V7 | 2,5* | 1,2 | 3,3 | 10,1 |

| | | | | |
|---|---|---|---|---|
| Die Bestimmung des d₅₀ Wertes des Hüttensandes erfolgt mittels Laserbeugung (Malvern Mastersizer 2000). *in wässriger Suspension V1 (Vergleich): Es wird ausschließlich CEM I 42.5N (Schwenk Zement KG, Werk Mergelstetten) als Bindemittel eingesetzt. V2 (Vergleich): Es wird Hüttensand (Hüttensand Salzgitter GmbH & Co. KG) mit einer spezifischen Oberfläche von 3500 cm²/g als Bindemittel eingesetzt. V3 (Vergleich): Es wird ein nach der allgemeinen Versuchsvorschrift hergestelltes Bindemittel eingesetzt, wobei kein Mahlhilfsmittel eingesetzt wird. V4 (Erfindungsgemäß): Es wird ein nach der allgemeinen Versuchsvorschrift hergestelltes Bindemittel eingesetzt, wobei als Mahlhilfsmittel 0,1 Gew.-% eines Erhärtungsbeschleuniger auf Basis von Calciumsilikathydrat (Master XSEED100, Markenname der BASF Construction Solutions GmbH), bezogen auf den gemahlenen Hüttensand, eingesetzt wird. V5 (Erfindungsgemäß): Es wird ein nach der allgemeinen Versuchsvorschrift hergestelltes Bindemittel eingesetzt, wobei als Mahlhilfsmittel 0,1 Gew.-% eines phosphatierten Polykondensationsproduktes (MasterEase 3000, Markenname der BASF Construction Solutions GmbH), bezogen auf den gemahlenen Hüttensand eingesetzt wird. V6 (Vergleich): Es wird ein nach der allgemeinen Versuchsvorschrift hergestelltes Bindemittel eingesetzt, wobei an Stelle des vollentsalzten Wassers 1421 g Isopropanol als Lösungsmittel eingesetzt und kein Mahlhilfsmittel verwendet wird. V7 (Vergleich): Es wird ein nach der allgemeinen Versuchsvorschrift hergestelltes Bindemittel eingesetzt, wobei an Stelle des vollentsalzten Wassers 1421 g Hexanol als Lösungsmittel eingesetzt und kein Mahlhilfsmittel verwendet wird. | | | | |

## Patentansprüche

1. Verfahren zur Nassvermahlung von Schlacke,
wobei mehr als 100 kWh Mahlenergie pro Tonne Schlacke eingebracht werden und wobei das Gewichtsverhältnis von Schlacke zu Wasser von 0,05 bis 4 zu 1 beträgt und vor oder während der Nassvermahlung dem Mahlgut 0,005 bis 2 Gew.-% eines Mahlhilfsmittels, bezogen auf die Schlacke, zugesetzt wird, welches mindestens eine Verbindung aus der Reihe Polycarboxylatether, phosphatiertes Polykondensationsprodukt, Ligninsulfonat, Melaminformaldehydsulfonat, Naphtalinformaldehydsulfonat, Mono-, Di-, Tri- und Polyglykole, Polyalkohole, Alkanolamin, Aminosäuren, Zucker, Molasse und Erhärtungsbeschleuniger auf Basis von Calciumsilikathydrat umfasst.

2. Verfahren nach Anspruch 1, **dadurch gekennzeichnet, dass** es sich bei der Schlacke um Hochofenschlacke handelt.

3. Verfahren nach Anspruch 1 oder 2, **dadurch gekennzeichnet, dass** bei der Nassvermahlung Mahlkörper eingesetzt werden, wobei das Gewichtsverhältnis von Schlacke zu Mahlkörpern 1 bis 15 zu 1 beträgt.

4. Verfahren nach einem der Ansprüche 1 bis 3, **dadurch gekennzeichnet, dass** die Schlacke folgende Zusammensetzung aufweist
| | |
|---|---|
| 20 bis 50 | Gew.-% SiO₂ |
| 5 bis 40 | Gew.-% Al₂O₃ |
| 0 bis 3 | Gew.-% Fe₂O₃ |
| 20 bis 50 | Gew.-% CaO |
| 0 bis 20 | Gew.-% MgO |
| 0 bis 5 | Gew.-% MnO |
| 0 bis 2 | Gew.-% SO₃ |
| > 80 | Gew.-% Glasgehalt. |

5. Verfahren nach einem der Ansprüche 1 bis 4, **dadurch gekennzeichnet, dass** es sich bei dem Mahlhilfsmittel um mindestens eines aus der Reihe Polycarboxylatether und phosphatiertes Polykondensationsprodukt handelt, wobei das Mahlhilfsmittel eine Struktureinheit (I),
*-U-(C(O))ₖ-X-(AlkO)ₙ-W (I)
wobei
* die Bindungsstelle an das säuregruppenhaltige Polymer anzeigt,
U für eine chemische Bindung oder eine Alkylengruppe mit 1 bis 8 C-Atomen steht,
X Sauerstoff, Schwefel oder eine Gruppe NR¹ bedeutet,
k 0 oder 1 ist,
n für eine ganze Zahl steht, deren Mittelwert, bezogen auf das säuregruppenhaltige Polymer im Bereich von 1 bis 300 liegt,
Alk für C₂-C₄-Alkylen steht, wobei Alk innerhalb der Gruppe (Alk-O)ₙ gleich oder verschieden sein kann,
W einen Wasserstoff-, einen C₁-C₆-Alkyl- oder einen Arylrest bedeutet oder die Gruppe Y-F bedeutet, wobei
Y für eine lineare oder verzweigte Alkylengruppe mit 2 bis 8 C-Atomen steht, die einen Phenylring tragen kann,
F für einen über Stickstoff gebundenen 5- bis 10-gliedrigen Stickstoffheterocyclus steht, der als Ringglieder, neben dem Stickstoffatom und neben Kohlenstoffatomen, 1, 2 oder 3 zusätzliche Heteroatome, ausgewählt unter Sauerstoff, Stickstoff und Schwefel aufweisen kann, wobei die Stickstoffringlieder eine Gruppe R² aufweisen können, und wobei 1 oder 2 Kohlenstoffringglieder als Carbonylgruppe vorliegen können,
R¹ für Wasserstoff, C₁-C₄-Alkyl oder Benzyl steht, und
R² für Wasserstoff, C₁-C₄-Alkyl oder Benzyl steht,
umfasst.

6. Verfahren nach Anspruch 5, **dadurch gekennzeichnet, dass** das phosphatierte Polykondensationsprodukt
(II) mindestens eine einen Aromaten oder Heteroaromaten und eine Struktureinheit (I) aufweisende Struktureinheit und
(III) mindestens eine phosphatierte einen Aromaten oder Heteroaromaten aufweisende Struktureinheit
umfasst.

7. Verfahren nach Anspruch 6, **dadurch gekennzeichnet, dass** die Struktureinheiten (II) und (III) durch folgende allgemeine Formeln repräsentiert werden
(II) A-U-(C(O))ₖ-X-(AlkO)ₙ-W
mit
A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen;
(III) A-U-(C(O))ₖ-X-(AlkO)ₙ-P(O)(OMₐ)₂
A gleich oder verschieden sowie repräsentiert durch eine substituierte oder unsubstituierte aromatische oder heteroaromatische Verbindung mit 5 bis 10 C-Atomen im aromatischen System, wobei die weiteren Reste die für Struktureinheit (I) genannte Bedeutung besitzen und
M für Wasserstoff, ein ein-, zwei- oder dreiwertiges Metallkation, Ammoniumion oder einen organischen Aminrest
a für 1/3, 1/2 oder 1 stehen

8. Verfahren nach Anspruch 6 oder 7, **dadurch gekennzeichnet, dass** das Polykondensationsprodukt eine weitere Struktureinheit (IV) enthält, welche durch folgende Formel repräsentiert wird 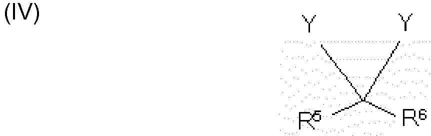 mit
Y unabhängig voneinander gleich oder verschieden und repräsentiert durch (II), (III) oder weitere Bestandteile des Polykondensationsproduktes.

9. Verfahren nach Anspruch 5, **dadurch gekennzeichnet, dass** der Polycarboxylatether mindestens ein Copolymer darstellt, welches erhältlich ist durch Polymerisation einer Mischung von Monomeren, umfassend
(V) mindestens ein ethylenisch ungesättigtes Monomer, welches mindestens einen Rest aus der Reihe Carbonsäure, Carbonsäuresalz, Carbonsäureester, Carbonsäureamid, Carbonsäureanhydrid und Carbonsäureimid umfasst
und
(VI) mindestens ein ethylenisch ungesättigtes Monomer mit einer Struktureinheit (I).

10. Verfahren nach Anspruch 9, **dadurch gekennzeichnet, dass** das ethylenisch ungesättigte Monomer (V) durch mindestens eine der folgenden allgemeinen Formeln aus der Gruppe (Va), (Vb) und (Vc) repräsentiert wird 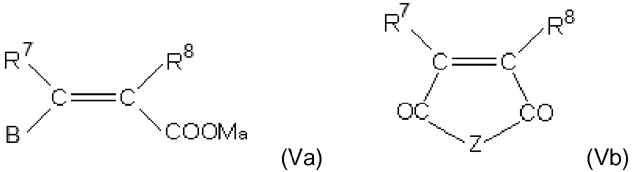 wobei
R⁷ und R⁸ unabhängig voneinander für Wasserstoff oder einen aliphatischen Kohlenwasserstoffrest mit 1 bis 20 C-Atomen
B für H, -COOMₐ, -CO-O(C_{q}H_{2q}O)ᵣ-R⁹, -CO-NH-(C_{q}H_{2q}O)ᵣ-R⁹
M für Wasserstoff, ein ein-, zwei- oder dreiwertiges Metallkation, Ammoniumion oder einen organischen Aminrest
a für 1/3, 1/2 oder 1
R⁹ für Wasserstoff, einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
q unabhängig voneinander für jede (C_{q}H_{2q}O)-Einheit gleich oder verschieden 2, 3 oder 4 und
r für 0 bis 200
Z für O, NR¹⁶
R¹⁶ unabhängig voneinander gleich oder verschieden sowie repräsentiert durch einen verzweigten oder unverzweigten C₁- bis C₄₀-Alkylrest, C₅-bis C₈-Cycloalkylrest, Arylrest, Heteroarylrest oder H
stehen, 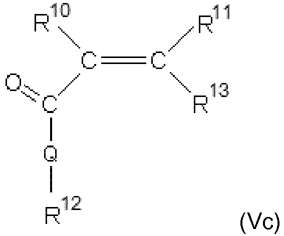 mit
R¹⁰ und R¹¹ unabhängig voneinander für Wasserstoff oder einen aliphatischen Kohlenwasserstoffrest mit 1 bis 20 C-Atomen, einen cycloaliphatischen Kohlenwasserstoffrest mit 5 bis 8 C-Atomen, einen ggf. substituierten Arylrest mit 6 bis 14 C-Atomen
R¹² gleich oder verschieden sowie repräsentiert durch (CₙH₂ₙ)-SO₃Mₐ mit n = 0, 1, 2, 3 oder 4, (CₙH₂ₙ)-OH mit n = 0, 1, 2, 3 oder 4; (CₙH₂ₙ)-PO₃(Mₐ)₂ mit n = 0, 1, 2, 3 oder 4, (CₙH₂ₙ)-OPO₃(Mₐ)₂ mit n= 0, 1, 2, 3 oder 4, (C₆H₄)-SO₃Mₐ, (C₆H₄)-PO₃(Mₐ)₂, (C₆H₄)-OPO₃(Mₐ)₂ und (CₙH₂ₙ)-NR¹⁴_{b} mit n = 0, 1, 2, 3 oder 4 und b = 2 oder 3 sowie M für Wasserstoff, ein ein-, zwei- oder dreiwertiges Metallkation, Ammoniumion oder einen organischen Aminrest und a für 1/3, 1/2 oder 1
R¹³ für H, -COOMₐ, -CO-O(C_{q}H_{2q}O)ᵣ-R⁹, -CO-NH-(C_{q}H_{2q}O)ᵣ-R⁹, wobei Mₐ, R⁹, q und r oben genannte Bedeutungen besitzen
R¹⁴ für Wasserstoff, einen aliphatischen Kohlenwasserstoffrest mit 1 bis 10 C-Atomen, einen cycloaliphatischen Kohlenwasserstoffrest mit 5 bis 8 C-Atomen, ein ggf. substituierter Arylrest mit 6 bis 14 C-Atomen.
Q gleich oder verschieden sowie repräsentiert durch NH, NR¹⁵ oder O; wobei R¹⁵ für einen aliphatischen Kohlenwasserstoffrest mit 1 bis 10 C-Atomen, einen cycloaliphatischen Kohlenwasserstoffrest mit 5 bis 8 C-Atomen oder ein ggf. substituierter Arylrest mit 6 bis 14 C-Atomen steht.

11. Verfahren nach einem der Ansprüche 1 bis 4, **dadurch gekennzeichnet, dass** die Partikelgröße d₅₀ des Erhärtungsbeschleuniger auf Basis von Calciumsilikathydrat kleiner als 5 µm ist.

12. Verfahren nach einem der Ansprüche 1 bis 11, **dadurch gekennzeichnet, dass** die Nassvermahlung in einer Rührwerkskugelmühle durchgeführt wird.

13. Vermahlene Schlacke, hergestellt nach einem der Ansprüche 1 bis 12, wobei die vermahlene Schlacke das Mahlhilfsmittel umfasst.

14. Verwendung einer Schlacke nach Anspruch 13 als Bindemittel oder in einer Bindemittelzusammensetzung, wobei der Bindemittelanteil 5 bis 99 Gew.-% der erfindungsgemäßen Schlacke und 1 bis 95 Gew.-% Zement umfasst.

15. Verwendung einer Schlacke nach Anspruch 13 in einer zementären Zusammensetzung in einer Menge von 0,1 bis 99 Gew.-% bezogen auf die Trockenmasse.

## Claims

1. Process for the wet milling of slag,
wherein more than 100 kWh of milling energy are introduced per metric ton of slag and wherein the weight ratio of slag to water is 0.05-4:1 and from 0.005 to 2% by weight, based on the slag, of a milling auxiliary which comprises at least one compound selected from the group consisting of polycarboxylate ether, phosphated polycondensation product, lignosulfonate, melamine-formaldehyde sulfonate, naphthalene-formaldehyde sulfonate, monoglycols, diglycols, triglycols and polyglycols, polyalcohols, alkanolamine, amino acids, sugar, molasses and curing accelerators based on calcium silicate hydrate is added to the material being milled before or during the wet milling.

2. Process according to Claim 1, **characterized in that** the slag is blast furnace slag.

3. Process according to Claim 1 or 2, **characterized in that** milling media are used in the wet milling, with the weight ratio of slag to milling media being 1-15:1.

4. Process according to any of Claims 1 to 3, **characterized in that** the slag has the following composition
| | |
|---|---|
| from 20 to 50% | by weight of SiO₂ |
| | |
|---|---|
| from 5 to 40% | by weight of Al₂O₃ |
| from 0 to 3% | by weight of Fe₂O₃ |
| from 20 to 50% | by weight of CaO |
| from 0 to 20% | by weight of MgO |
| from 0 to 5% | by weight of MnO |
| from 0 to 2% | by weight of SO₃ |
| > 80% | by weight of glass content. |

5. Process according to any of Claims 1 to 4, **characterized in that** the milling auxiliary is at least one compound selected from the group consisting of polycarboxylate ether and phosphated polycondensation product, wherein the milling auxiliary comprises a structural unit (I),
*-U-(C (O))ₖ-X-(AlkO)ₙ-W (I)
where
* indicates the point of bonding to the polymer comprising acid groups,
U is a chemical bond or an alkylene group having from 1 to 8 carbon atoms,
X is oxygen, sulfur or an NR¹ group,
k is 0 or 1,
n is an integer having an average, based on the polymer comprising acid groups, in the range from 1 to 300,
Alk is C₂-C₄-alkylene, where Alk can be identical or different within the group (AIk-O)ₙ,
W is a hydrogen radical, a C₁-C₆-alkyl radical or an aryl radical or is the group Y-F, where Y is a linear or branched alkylene group which has from 2 to 8 carbon atoms and can bear a phenyl ring,
F is a 5- to 10-membered nitrogen heterocycle which is bound via nitrogen and can have, apart from the nitrogen atom and apart from carbon atoms, 1, 2 or 3 additional heteroatoms selected from among oxygen, nitrogen and sulfur as ring members, where the nitrogen ring members can bear an R² group, and where 1 or 2 carbon ring members can be present as carbonyl group,
R¹ is hydrogen, C₁-C₄-alkyl or benzyl, and
R² is hydrogen, C₁-C₄-alkyl or benzyl.

6. Process according to Claim 5, **characterized in that** the phosphated polycondensation product comprises
(II) at least one structural unit having an aromatic or heteroaromatic and a structural unit (I) and
(III) at least one phosphated structural unit having an aromatic or heteroaromatic.

7. Process according to Claim 6, **characterized in that** the structural units (II) and (III) are represented by the following general formulae
(II) A-U-(C(O))ₖ-X- (AlkO)ₙ-W
where
the radicals A are identical or different and are represented by a substituted or unsubstituted aromatic or heteroaromatic compound having from 5 to 10 carbon atoms in the aromatic system, where the further radicals have the meanings indicated for structural unit (I);
(III) A-U- (C(O))ₖ-X- (AlkO)ₙ-P(O)(OMₐ)₂
where
the radicals A are identical or different and are represented by a substituted or unsubstituted aromatic or heteroaromatic compound having from 5 to 10 carbon atoms in the aromatic system, where the further radicals have the meanings indicated for structural unit (I) and
M is hydrogen, a monovalent, divalent or trivalent metal cation, an ammonium ion or an organic amine radical
a is 1/3, 1/2 or 1.

8. Process according to Claim 6 or 7, **characterized in that** the polycondensation product comprises a further structural unit (IV) which is represented by the following formula 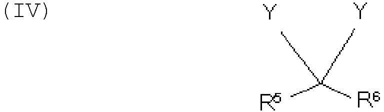 where
the radicals Y are, independently of one another, identical or different and are represented by (II), (III) or further constituents of the polycondensation product.

9. Process according to Claim 5, **characterized in that** the polycarboxylate ether is at least one copolymer obtainable by polymerization of a mixture of monomers comprising
(V) at least one ethylenically unsaturated monomer which comprises at least one radical selected from the group consisting of carboxylic acid, carboxylic acid salt, carboxylic ester, carboxamide, carboxylic anhydride and carboximide
and
(VI) at least one ethylenically unsaturated monomer having a structural unit (I).

10. Process according to Claim 9, **characterized in that** the ethylenically unsaturated monomer (V) is represented by at least one of the following general formulae from the group (Va), (Vb) and (Vc) 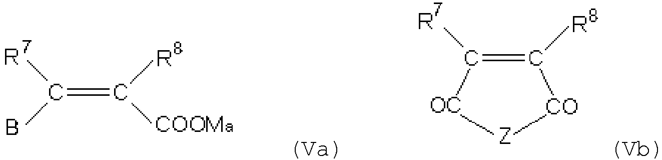 where
R⁷ and R⁸ are each, independently of one another, hydrogen or an aliphatic hydrocarbon radical having from 1 to 20 carbon atoms
B is H, -COOMₐ, -CO-O(C_{q}H_{2q}O)ᵣ-R⁹, -CO-NH-(C_{q}H_{2q}O)ᵣ-R⁹
M is hydrogen, a monovalent, divalent or trivalent metal cation, ammonium ion or an organic amine radical
a is 1/3, 1/2 or 1
R⁹ is hydrogen, an aliphatic hydrocarbon radical having from 1 to 20 carbon atoms, a cycloaliphatic hydrocarbon radical having from 5 to 8 carbon atoms, an optionally substituted aryl radical having from 6 to 14 carbon atoms
the indices q are, independently of one another, identical or different for each (C_{q}H_{2q}O)- unit and are in each case 2, 3 or 4 and
r is from 0 to 200
Z is O, NR¹⁶
the radicals R¹⁶ are, independently of one another, identical or different and are each represented by a branched or unbranched C₁- to C₁₀-alkyl radical, C₅- to C₈-cycloalkyl radical, aryl radical, heteroaryl radical or H, 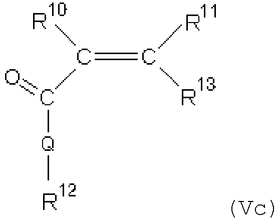
where
R¹⁰ and R¹¹ are each, independently of one another, hydrogen or an aliphatic hydrocarbon radical having from 1 to 20 carbon atoms, a cycloaliphatic hydrocarbon radical having from 5 to 8 carbon atoms, an optionally substituted aryl radical having from 6 to 14 carbon atoms
the radicals R¹² are identical or different and are represented by (CₙH₂ₙ) -SO₃Mₐ where n = 0, 1, 2, 3 or 4, (CₙH₂ₙ) -OH where n = 0, 1, 2, 3 or 4; (CₙH₂ₙ) -PO₃(Mₐ)₂ where n = 0, 1, 2, 3 or 4, (CₙH₂ₙ)-OPO₃(Mₐ)₂ where n= 0, 1, 2, 3 or 4, (C₆H₄) -SO₃Mₐ, (C₆H₄)-PO₃(Mₐ)₂, (C₆H₄)- OPO₃ (Mₐ) ₂ and (CₙH₂ₙ) -NR¹⁴_{b} where n = 0, 1, 2, 3 or 4 and b = 2 or 3 and M is hydrogen, a monovalent, divalent or trivalent metal cation, ammonium ion or an organic amine radical and a is 1/3, 1/2 or 1
R¹³ is H, -COOMₐ, -CO-O(C_{q}H_{2q}O)ᵣ-R⁹, -CO-NH-(C_{q}H_{2q}O)ᵣ-R⁹, where Mₐ, R⁹, q and r are as defined above
R¹⁴ is hydrogen, an aliphatic hydrocarbon radical having from 1 to 10 carbon atoms, a cycloaliphatic hydrocarbon radical having from 5 to 8 carbon atoms, an optionally substituted aryl radical having from 6 to 14 carbon atoms,
the radicals Q are identical or different and are represented by NH, NR¹⁵ or O;
where R¹⁵ is an aliphatic hydrocarbon radical having from 1 to 10 carbon atoms, a cycloaliphatic hydrocarbon radical having from 5 to 8 carbon atoms or an optionally substituted aryl radical having from 6 to 14 carbon atoms.

11. Process according to any of Claims 1 to 4, **characterized in that** the particle size d₅₀ of the curing accelerator based on calcium silicate hydrate is less than 5 µm.

12. Process according to any of Claims 1 to 11, **characterized in that** the wet milling is carried out in a stirred ball mill.

13. Milled slag produced according to any of Claims 1 to 12, wherein the milled slag comprises the milling auxiliary.

14. Use of a slag according to Claim 13 as binder or in a binder composition, wherein the binder component comprises from 5 to 99% by weight of the slag of the invention and from 1 to 95% by weight of cement.

15. Use of a slag according to Claim 13 in a cement-based composition in an amount of from 0.1 to 99% by weight based on the dry mass.

## Revendications

1. Procédé de broyage humide de laitier, dans lequel on introduit plus de 100 kWh d'énergie de broyage par tonne de laitier, et le rapport en poids du laitier à l'eau est de 0,05 à 4:1, et, avant ou pendant le broyage humide, on ajoute à la matière à broyer 0,005 à 2 % en poids d'un adjuvant de broyage, par rapport au laitier, qui comprend au moins un composé de la série polycarboxylate-éther, produit de polycondensation phosphaté, ligninesulfonate, mélamine-formaldéhyde-sulfonate, naphtalène-formaldéhyde-sulfonate, mono-, di-, tri- et polyglycols, polyalcools, alcanolamine, acides aminés, sucre, mélasse et un accélérateur de durcissement à base de silicate de calcium hydraté.

2. Procédé selon la revendication 1, **caractérisé en ce que** le laitier est un laitier de haut fourneau.

3. Procédé selon la revendication 1 ou 2, **caractérisé en ce qu'**on utilise lors du broyage humide des éléments broyeurs, le rapport en poids du laitier aux éléments broyeurs étant de 1 à 15:1.

4. Procédé selon l'une des revendications 1 à 3, **caractérisé en ce que** le laitier présente la composition suivante
20 à 50 % en poids de SiO₂
5 à 40 % en poids d'Al₂O₃
0 à 3 % en poids de Fe₂O₃
20 à 50 % en poids de CaO
0 à 20 % en poids de MgO
0 à 5 % en poids de MnO
0 à 2 % en poids de SO₃
> 80 % en poids teneur en verre.

5. Procédé selon l'une des revendications 1 à 4, **caractérisé en ce que** l'adjuvant de broyage est au moins un tel adjuvant de la série polycarboxylate-éther et produit de polycondensation phosphaté,
dans lequel l'adjuvant de broyage comprend un motif structural (I),
*-U-(C(O))ₖ-X-(AlkO)ₙ-W (I)
dans laquelle
* représente le point de liaison au polymère contenant des groupes acides,
U représente une liaison chimique ou un groupe alkylène ayant 1 à 8 atomes de carbone,
X représente un oxygène, un soufre ou un groupe NR¹, k représente 0 ou 1,
n représente un nombre entier dont la moyenne, rapportée au polymère contenant des groupes acides, est dans la plage de 1 à 300,
Alk représente un alkylène en C₂-C₄, Alk, dans le groupe (Alk-O)ₙ, pouvant être identique ou différent,
W représente un hydrogène, un radical alkyle en C₁-C₆ ou un radical aryle, ou représente le groupe Y-F, dans lequel
Y représente un groupe alkylène linéaire ou ramifié ayant 2 à 8 atomes de carbone, qui peut porter un cycle phényle,
F représente un hétérocycle azoté à 5 à 10 chaînons lié par l'intermédiaire d'un azote, qui peut comporter, en tant que termes cycliques, outre l'atome d'azote et outre les atomes de carbone, 1, 2 ou 3 hétéroatomes supplémentaires choisis parmi l'oxygène, l'azote et le soufre, les termes nucléaires azotés pouvant comporter un groupe R², et 1 ou 2 termes nucléaires carbonés peuvent être présents sous forme d'un groupe carbonyle, R¹ représente un hydrogène, un alkyle en C₁-C₄ ou un benzyle, et
R² représente un hydrogène, un alkyle en C₁-C₄ ou un benzyle.

6. Procédé selon la revendication 5, **caractérisé en ce que** le produit de polycondensation phosphaté comprend
(II) au moins un motif structural comportant un aromatique ou des hétéroaromatiques et un motif structural (I) et
(III) au moins un motif structural phosphaté comprenant un aromatique ou un hétéroaromatique.

7. Procédé selon la revendication 6, **caractérisé en ce que** les motifs structuraux (II) et (III) peuvent être représentés par les formules générales suivantes
(II) A-U-(C(O))ₖ-X-(AlkO)ₙ-W
dans laquelle
A est identique ou différent et est représenté par un composé aromatique ou hétéroaromatique substitué ou non substitué ayant 5 à 10 atomes de carbone dans le système aromatique, les autres radicaux ayant la signification donnée pour le motif structural (I) ;
(III) A-U-(C(O))ₖ-X-(AlkO)ₙ-P(O)(OMₐ)₂
A est identique ou différent, représenté par un composé aromatique ou hétéroaromatique substitué ou non substitué ayant 5 à 10 atomes de carbone dans le système aromatique, les autres radicaux ayant les significations données pour le motif structural (I) et
M représente un hydrogène, un cation métallique mono-, di- ou trivalent, un ion ammonium ou un radical amino organique
a représente 1/3, 1/2 ou 1.

8. Procédé selon la revendication 6 ou 7, **caractérisé en ce que** le produit de polycondensation contient un autre motif structural (IV) qui est représenté par la formule suivante 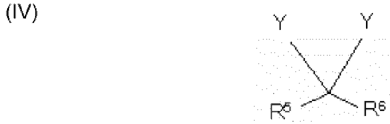 avec
Y est indépendamment l'un de l'autre identique ou différent et est représenté par (II), (III) ou d'autres constituants du produit de polycondensation.

9. Procédé selon la revendication 5, **caractérisé en ce que** le polycarboxylate-éther représente au moins un copolymère qui peut être obtenu par polymérisation d'un mélange de monomères comprenant
(V) au moins un monomère à insaturation éthylénique, qui comprend au moins un radical de la série acide carboxylique, sel d'acide carboxylique, ester d'acide carboxylique, carboxamide, anhydride carboxylique et carboximide
et
(VI) au moins un monomère à insaturation éthylénique ayant un motif structural (I).

10. Procédé selon la revendication 9, **caractérisé en ce que** le monomère à insaturation éthylénique (V) est représenté par au moins l'une des formules générales suivantes du groupe (Va), (Vb) et (Vc) 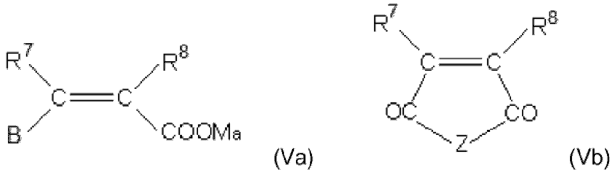 dans laquelle
R⁷ et R⁸ représentent indépendamment l'un de l'autre un hydrogène ou un radical hydrocarboné aliphatique ayant 1 à 20 atomes de carbone,
B représente H, -COOMₐ, -CO-O(C_{q}H_{2q}O)ᵣ-R⁹, -CO-NH-(C_{q}H_{2q}O)ᵣ-R⁹
M représente un hydrogène, un cation métallique mono-, di- ou trivalent, un ion ammonium ou un radical amino organique
a représente 1/3, 1/2 ou 1
R⁹ représente un hydrogène, un radical hydrocarboné aliphatique ayant 1 à 20 atomes de carbone, un radical hydrocarboné cycloaliphatique ayant 5 à 8 atomes de carbone, un radical aryle éventuellement substitué ayant 6 à 14 atomes de carbone
q indépendamment les uns des autres, pour chaque motif (C_{q}H_{2q}O), est identique ou différent et représente 2, 3 ou 4 et
r représente 0 à 200
Z représente O, NR¹⁶
R¹⁶ est identique ou différent les uns des autres et est représenté par un radical alkyle en C₁ à C₁₀ ramifié ou non ramifié, un radical cycloalkyle en C₅ à C₈, un radical aryle, un radical hétéroaryle ou H, 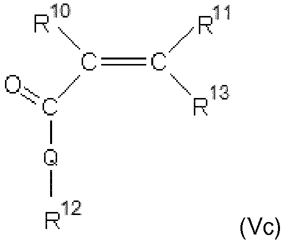
avec
R¹⁰ et R¹¹ représentent indépendamment l'un de l'autre un hydrogène ou un radical hydrocarboné aliphatique ayant 1 à 20 atomes de carbone, un radical hydrocarboné cycloaliphatique ayant 5 à 8 atomes de carbone, un radical aryle éventuellement substitué ayant 6 à 14 atomes de carbone
R¹² est identique ou différent et est représenté par (CₙH₂ₙ)-SO₃Mₐ avec n = 0, 1, 2, 3 ou 4, (CₙH₂ₙ) -OH avec n = 0, 1, 2, 3 ou 4 ; (CₙH₂ₙ)-PO₃(Mₐ)₂ avec n = 0, 1, 2, 3 ou 4, (CₙH₂ₙ)-OPO₃(Mₐ)₂ avec n = 0, 1, 2, 3 ou 4, (C₆H₄) - SO₃Mₐ, (C₆H₄)-PO₃(Mₐ)2, (C₆H₄)-OPO₃(Mₐ)₂ et (CₙH₂ₙ)-NR¹⁴_{b} avec n = 0, 1, 2, 3 ou 4 et b = 2 ou 3, ainsi que M représente un hydrogène, un cation métallique mono-, di- ou trivalent, un ion ammonium ou un radical amino organique et a représente 1/3, 1/2 ou 1 R¹³ représente H, -COOMₐ, -CO-O(C_{q}H_{2q}O)ᵣ-R⁹, -CO-NH-(C_{q}H_{2q}O)ᵣ-R⁹, Mₐ, R⁹, q et r ayant les significations données ci-dessus,
R¹⁴ représente un hydrogène, un radical hydrocarboné aliphatique ayant 1 à 10 atomes de carbone, un radical hydrocarboné cycloaliphatique ayant 5 à 8 atomes de carbone, un radical aryle éventuellement substitué ayant 6 à 14 atomes de carbone,
Q est identique ou différent et est représenté par NH, NR¹⁵ ou O ; R¹⁵ représentant un radical hydrocarboné aliphatique ayant 1 à 10 atomes de carbone, un radical hydrocarboné cycloaliphatique ayant 5 à 8 atomes de carbone ou un radical aryle éventuellement substitué ayant 6 à 14 atomes de carbone.

11. Procédé selon l'une des revendications 1 à 4, **caractérisé en ce que** la granulométrie d₅₀ de l'accélérateur de durcissement à base de silicate de calcium hydraté est inférieure à 5 µm.

12. Procédé selon l'une des revendications 1 à 11, **caractérisé en ce que** le broyage humide est réalisé dans un broyeur-agitateur à billes.

13. Laitier broyé, fabriqué selon l'une des revendications 1 à 12, le laitier broyé comprenant l'adjuvant de broyage.

14. Utilisation d'un laitier selon la revendication 13 en tant que liant ou dans une composition liante, la partie liant comprenant 5 à 99 % en poids du laitier selon l'invention et 1 à 95 % en poids de ciment.

15. Utilisation d'un laitier selon la revendication 13 dans une composition cimentaire en une quantité de 0,1 à 99 % en poids par rapport à la masse sèche.
